# EUROPEAN PATENT APPLICATION

(11) **EP 4 644 253 A1**
(43) Date of publication of application: **05.11.2025**
(21) Application number: 24275057.8
(22) Date of filing: 03.05.2024
(51) Int. Cl.: B64D 31/02

(54) **ACTIVE LINEAR THROTTLE ASSEMBLY**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An active throttle assembly is described. The active throttle assembly comprises a linear motor (120), the linear motor (120) comprising a linearly extending track (124) and a carriage (122). The active throttle assembly further comprises a grip (110), wherein the grip (110) is affixed to the carriage (122); a controller (140) configured to control a current or voltage provided by a power supply (570) to at least one of the linearly extending track (124) or the carriage (122) in order to control movement of the carriage (122) with respect to the linearly extending track (124); and a detector configured to measure at least one of a kinematic variable of the grip (110) or a force applied to the grip (110).

## Description

### FIELD

The present invention relates to an active linear throttle assembly wherein a linear motor moves a grip of the active linear throttle assembly to provide haptic feedback to a user of the active linear throttle assembly.

### BACKGROUND

In fly by wire technologies, the direct mechanical connection between the throttle of an aircraft and the engines was replaced by an electrical connection, with the engines being controlled based on a sensed position of the throttle (e.g. of the throttle lever or of the moveable grip). The advent of active throttles has allowed tactile cueing via haptic feedback to be utilised to reduce the workload of the pilot when flying in demanding situations. Active throttles have been developed to provide this haptic feedback to the pilot by including one or more actuators which can be driven by a control signal (e.g. based on actual aircraft conditions) to provide haptic feedback to the pilot. However, such active throttles tend to be rotary throttles. Such rotary throttles can have a movement which feels unnatural to a pilot and thus make it harder for a pilot to accurate control the engine of an aircraft. In contrast, linear throttles generally provide a more natural control enabling the pilot to have increased control over the aircraft. It would be desirable to provide haptic feedback to such linear throttles in order to provide an active linear throttle.

### SUMMARY

An embodiment of this application defines an active throttle assembly comprising a linear motor wherein the linear motor comprises a linearly extending track and a carriage. The active throttle assembly further comprises a grip, wherein the grip is affixed to the carriage; a controller configured to control a current or voltage provided by a power supply to at least one of the linearly extending track or the carriage in order to control movement of the carriage with respect to the linearly extending track; and a detector configured to measure at least one of a kinematic variable of the grip or a force applied to the grip. The use of a linear motor provides a simple way to provide haptic feedback in a linear throttle assembly.

In some examples, the controller is configured to control current or voltage provided by the power supply to provide haptic feedback to a user of the active throttle assembly to indicate an operating condition of an engine of a vehicle containing the active throttle assembly. The active linear throttle assembly can thus be used to provide useful haptic feedback to a user or pilot. In some examples, the detector is configured to provide an input to the controller to enable the controller to provide haptic feedback based on the kinematic variable or force applied to the grip.

In some examples, the detector comprises a force detector arranged to measure a force applied to the grip by a user. The force detector can be remote or separate from the linear motor. In other words, the force detector can sense a force applied to the grip rather than a motor current. This provides a more accurate force reading that result in improved control of a vehicle or aircraft containing the active throttle assembly as well as improved haptic feedback to the user or pilot.

In some examples, the detector comprises a kinematic variable detector arranged to measure a kinematic variable of the grip. The kinematic variable detector can be separate or remote from the linear motor. Thus, the kinematic variable detector is not measuring a position of the linear motor. The use of a kinematic variable detector enables this information to be provided to a flight control system of an aircraft containing the active throttle assembly to provide additional data on the position of the grip of the throttle assembly to provide a backup mode if there are any faults with the linear motor. This data from the kinematic variable detector can also be used to determine the appropriate haptic feedback and in some examples, to control a vehicle containing the active throttle assembly.

In some examples, the detector comprises: a first detector, wherein the first detector is a force detector arranged to measure a force applied to the grip by a user; and a second detector, wherein the second detector is a kinematic variable detector arranged to measure a kinematic variable of the grip. As with the above force detector and kinematic variable detector, these detectors can be separate from the linear motor and provide a detector reading about a force applied to the grip or a kinematic variable of the grip without relying on motor current or a position of the linear motor. The use of both detectors provides additional data that can provide both improved haptic feedback and improved control of a vehicle containing the linear throttle assembly. In addition, the use of a force detector as well as kinematic variable sensor can ensure that data, based on the force applied to the grip can be obtained when the grip is jammed and will not move. This enables a vehicle containing the active throttle assembly to be controlled even when the active throttle assembly is in jam mode.

In examples where a force detector is used, then the force detector may be positioned on the grip. This can increase the accuracy of the reading from the force detector. In examples where a force detector is used then the force detector comprises at least one of an elastic element, an electrical resistance strain gauge, a foil strain gauge, a semiconductor strain gauge, a thin film strain gauge, a wire strain gauge, a piezoelectric transducer, a hydraulic load cell, a pneumatic load cell, a magno elastic, and a vibration element. These provide examples of force detectors that can detect a force or torque applied to the grip while not measuring motor current.

In examples where a kinematic variable detector is used then the kinematic variable detector may comprise at least one of a position detector configured to detect a position of the grip with respect to the linearly extending track; a velocity detector configured to detect a velocity of the grip with respect to the linearly extending track; and an acceleration detector configured to detect an acceleration of the grip with respect to the linearly extending track. Thus, multiple different kinematic variables can be sensed and potentially used to control the haptic feedback provided to the user or pilot and/or the engine of a vehicle containing the active throttle assembly. When a position detector is used, then the position detector may comprise at least one of a non-contacting sensor, a rotary variable differential transformer, a hall effect or a linear variable differential transformer. This provides examples of suitable position detectors. When a kinematic variable detector is used, then kinematic variable detector may be positioned on or proximate to the grip. This can increase the accuracy of any measurements or readings taken by the detector.

In some examples, the active throttle assembly further comprises a power supply configured to provide power to the linear motor under control of the controller. This can provide suitable power to the linear motor under control of the controller.

In some examples, the linear motor comprises a linear induction motor or a linear DC brushless motor configured to work with n phases of power, wherein n is at least 2; the linearly extending track comprises a plurality of electromagnetic coils, wherein the electromagnetic coils are arranged along a length of the linearly extending track in groups of n electromagnetic coils, wherein each electromagnetic coil comprises a coil of wire; the controller is configured to cause the power supply to provide power of an i^{th} phase to the coil of wire of the i^{th} electromagnetic coil in each group of n electronic coils, wherein i goes from 1 to n. This provides an example technique for implementing a linear motor that can be used in an active throttle assembly to provide haptic feedback. Having the electromagnetic coils be stationary can provide a simpler to install linear motor that undergoes less damage in use. In addition, using i^{th} phases of power can enable the correct level of control of movement of the carriage to provide haptic feedback to be chosen.

In the above example, the linear motor can be a linear induction motor and the carriage may comprise a ferromagnetic or paramagnetic engagement portion configured to engage with the linearly extending track. This ensures the carriage can move under the electromagnetic field generated by the electromagnetic coils of the linearly extending track. Alternative, the linear motor can be a linear DC brushless motor; the carriage may comprises one or more permanent magnets; and a surface of the carriage that faces or otherwise engages with the linearly extending track can comprise alternating north and south magnet poles of the one or more permanent magnets. This enables the use of a linear DC brushless motor which can have a higher power factor and generate less heat than a linear induction motor.

When the electromagnetic coils are along the length of the linearly extending track, then in some examples the electromagnetic coils are skewed along the length of the linearly extending track, in some examples the skew is an angle other 90°, and optionally, the electromagnetic coils are skewed at an angle of between 35° to 45° to a direction perpendicular to the length of the linearly extending track. This reduces cogging and provides a trade off between the reduction of cogging and the sensitivity of the linear motor.

In some examples, the linear motor comprises a linear DC brushless motor configured to work with n phases of power, wherein n is at least 2; the carriage comprises a magnetic engagement portion configured to engage with a surface of the linearly extending track, wherein the magnetic engagement portion comprises a plurality of electromagnetic coils arranged in groups of n electronic magnetic coils, wherein each electromagnetic coil comprises a coil of wire; the linearly extending track comprises a plurality of permanent magnets mounted along a length of the linearly extending track such that the surface of the linearly extending track comprises alternating north and south poles of the permanent magnets; and the controller is configured to cause the power supply to provide power of an i^{th} phase to the coil of wire of the i^{th} electromagnetic coil in each group of n electronic coils, wherein i goes from 1 to n. By placing the electromagnetic coils on the carriage, the number of electromagnetic coils required is reduced thus reducing the number of parts that may break or require repair.

In the above example, the plurality of permanent magnets may be skewed along the length of the linearly extending track. In some examples the angle of skew may be an angle other than 90°, and optionally, the plurality of permanent magnets may be skewed at an angle of between 35° and 45° to a direction perpendicular to the length of the linearly extending track. This can reduce cogging in the linear motor. In addition, the angle of between 35° and 45° provides a trade off between cogging and the sensitivity of the linear motor.

When a linear induction motor or linear DC brushless motor is used, then the power supply may be a DC power supply, and the active throttle assembly may further comprise a converter configured to convert DC power from the power supply to each of n phases of AC power. This enables the linear induction motor or linear DC brushless motor to be used with any suitable number of phases of power. This also enables more control over the phases of power and hence motion of the linear motor than simply using a 3-phase power supply.

In some examples, when a linear induction motor or linear DC brushless motor is used then the active throttle assembly may further comprise a linear guide positioned parallel with and adjacent to the linearly extending track, wherein the carriage is slidably mounted on the linear guide such that the carriage can move linearly along the linear guide. This can provide support for the carriage for example by supporting the carriage to be an appropriate height above the linearly extending track thus ensuring the correct functioning of the linear motor. In these examples, the active throttle assembly may also further comprise a second linear guide, positioned parallel with and adjacent to the linearly extending magnetic track, wherein: the carriage is slidably mounted on the second linear guide such that the carriage can move linearly along the second linear guide; and the linearly extending track is positioned between the first linear guide and the second linear guide. This enables support to be provided to the carriage on both sides and may also further enhance supporting the carriage at the correct height about the linearly extending track.

When one or more linear guides are used, then the active throttle assembly may further comprise a first stop at a first end of a length of the linear guide; and a second at a second end of the length of the linear guide. This can provide a limit to the movement of the carriage and prevent the carriage from disengaging with the linear motor.

In some examples, the linear motor comprises a tubular linear motor; the linearly extending track comprises a rod, wherein the rod comprises one or more cylindrical permanent magnets; and the carriage comprises a forcer, wherein the forcer comprises: a cylinder that surrounds at least a part of the rod; and one or more solenoids wrapped around the cylinder. This provides an alternative way of providing a linear motor that does not require a linear guide since the carriage comprising a tubular part of the tubular linear motor ensures the carriage will remain correctly positioned with respect to the linearly extending track.

In some examples, the linear motor comprises a homopolar linear motor; the linearly extending track comprises a pair of linearly extending rails wherein the pair of linearly extending rails are connected to the power supply at one end; and the carriage is configured to complete a circuit between the two linear extending rails. This provides another alternative way of providing a linear motor. This can simplify the technology used to implement the linear motor and thus provide a simpler install and reduce the need for repairs.

In some examples, the linear motor comprises a brushed linear motor, the linearly extending track comprises plurality of electromagnetic coils arranged along a length of the linearly extending track; and the carriage comprises a magnetic engagement portion configured to engage with the electromagnetic coils of the linearly extending track. In these examples, the magnetic engagement portion comprises: a plurality of permanent magnets mounted along a length of the carriage such that a surface of the carriage which engages with the linearly extending track comprises alternating north and south poles of the permanent magnets; and a brush connected to a power supply wherein the brush is configured to connect, in use, to the plurality of electromagnetic coils of the linearly extending track. Thus, a brushed linear motor can be used as part of an active linear throttle assembly.

A second embodiment of the application relates to a vehicle containing an active linear throttle assembly according to any of the above examples. A third embodiment of the application relates to an aircraft containing an active linear throttle assembly according to any of the above examples. This provides example uses of the active linear throttle assembly.

### BRIEF DESCRIPTION OF THE FIGURES

Embodiments of the invention will now be described by way of example only with reference to the figures, in which:
Figure 1 shows an active linear throttle assembly using a linear motor as an actuator;
Figure 2 shows an active linear throttle assembly using a linear induction motor or linear DC brushless motor as an actuator;
Figure 3 shows an active linear throttle assembly using a linear DC brushless motor as an actuator;
Figure 4 shows an active linear throttle assembly using a tubular linear motor as an actuator;
Figure 5 shows an active linear throttle assembly using a homopolar linear motor as an actuator;
Figure 6 shows an active linear throttle assembly using a brushed linear motor as an actuator;
Figure 7 is a schematic diagram of a first example aircraft system that can use the active linear throttle assembly of any of Figures 1 to 6;
Figure 8 is a schematic diagram of a second example aircraft system that can use the active linear throttle assembly of any of Figures 1 to 6;
Figure 9 is a schematic diagram of a third example aircraft system that can use the active linear throttle assembly of any of Figures 1 to 6;
Figure 10 is a schematic diagram of a computing device 1100 that is can be used as a controller to control an active linear throttle assembly of any of claims 1 to 9; and
Figure 11 shows an example of a vehicle on which the active linear throttle assembly is mounted.

### DETAILED DESCRIPTION

Even when using fly be wire technology that removes the direct connection between the throttle of an aircraft and the engine, throttle assemblies often comprise rotary throttles wherein a grip moves along a path defined by an arc of a circle. These throttle assemblies can be made active by having the grip be attached to a rotary actuator or motor which can then be driven by a controller to provide haptic feedback. This active feedback may comprise actual conditions of the aircraft but in addition, may also comprise, other feedback to pilots, e.g. in the form of soft stops (e.g. so that the pilot has to exert additional force to override a soft stop), gradients, gates, etc. However, the movement of rotary throttles can feel unnatural to a pilot which can make it harder for the pilot to provide fine-grained control of the motor. Therefore, using a linear throttle assembly can provide an improved interface that enables a pilot to provide more accurate control over an aircraft. However, when using linear throttle assemblies, it may still be desirable to provide haptic feedback to the pilot so that the pilot can be made aware of the conditions of the aircraft and any other required feedback. Thus, it would be beneficial to provide a linear throttle assembly that uses some form of linear actuator to provide haptic feedback to provide an active linear throttle.

The present application relates to using a linear motor to provide haptic feedback in a linear throttle assembly thus allowing the linear throttle assembly to act as an active linear throttle assembly. Using a linear motor provides a simple and elegant way of providing linear motion in a fashion that can easily be controlled by a controller. Linear motors are also advantageous since the use of known technologies can allow for easy repair and replacement. In addition, as the properties of linear motors are known it can be relatively easy to determine the correct control signals to provide the haptic feedback. The linear throttle assemblies of the present application can be used in or mounted in a vehicle in order to provide control of an engine of a vehicle. In some examples, the vehicle may comprise an aircraft and in some examples, the aircraft may comprise an aeroplane.

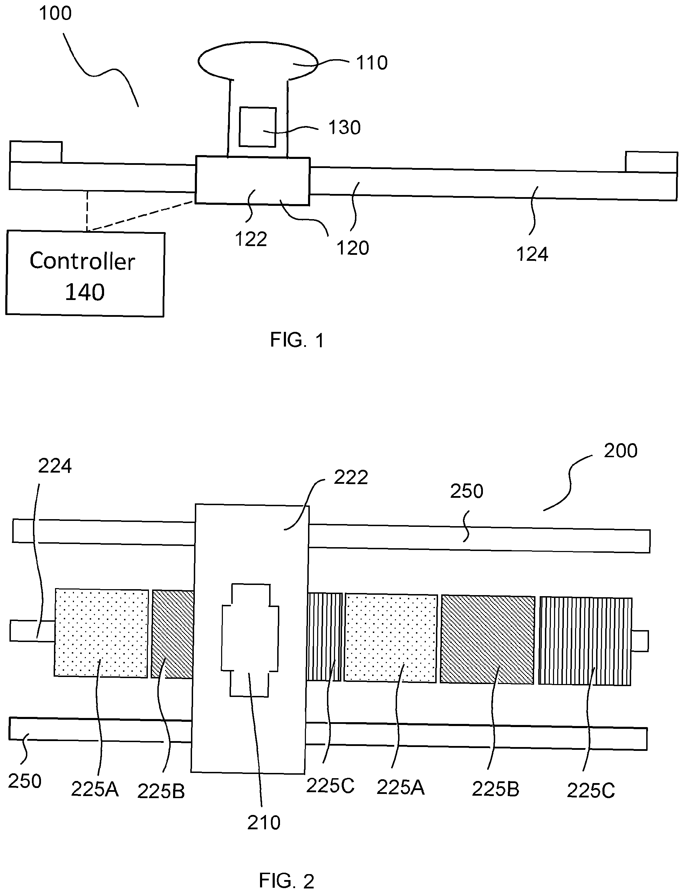

As shown in Figure 1, a linear throttle assembly 100, which can also be referred to as an active linear throttle assembly comprises a grip 110 that a pilot uses to grip or otherwise grab or handle the linear throttle assembly. The grip 110 can also be referred to as a handle, throttle lever or throttle control. The grip 110 is moved by the pilot to control an engine of an aircraft or other vehicle in which the throttle assembly 100 is fitted.

The grip 110 is mounted to a carriage 122 wherein the grip 110 and carriage 122 move together. The carriage 122 can also be referred to as a mount, support or base. In some examples the grip 110 may be directly mounted to the carriage 122. In other examples, the grip 110 may be indirectly mounted to the carriage 122 via another component of the active throttle assembly 100. However, in either case, the grip is fixedly mounted to the carriage 122 so that the grip 110 moves with the carriage 122.

The carriage 122 forms part of a linear motor 120 that is formed from a linearly extending track 124 and the carriage 122. The linearly extending track 124 can also be referred to as linearly extending rail or a linearly extending guide. Combined the linearly extending track 124 and the carriage 122 form the linear motor 120 in that when current or voltage is provided to one of the linearly extending track 124 or the carriage 122 the carriage 122 moves with respect to the linearly extending track 124 due to an electromagnetic force of the linear motor 120. In this respect the linearly extending track 124 can be considered an unwound stator and the carriage 122 can be considered an unwound rotor.

The linear throttle assembly 100 further comprises a controller 140 configured to control a current or voltage being provided to the linearly extended track 124 or the carriage 122 (or potentially both) in order to control movement of the carriage 122 with respect to the linearly extending track 124. In other words, the controller 140 is configured to control a current or voltage being provided to the linear motor 120 in order to control motion of the linear motor 120. The current or voltage can be provided by a power supply (not shown) which in some examples may form part of the linear throttle assembly 100 but in other examples may be separate from the linear throttle assembly 100 and may, for example, form part of an aircraft of other vehicle in which the linear throttle assembly 100 is used or mounted.

As mentioned above, the throttle assembly 100 is used by a user or pilot to control an engine of an aircraft or other vehicle. Thus, the throttle assembly 100 further comprises at least one detector or sensor 130 that measures at least one of a kinematic variable of the grip 110 or a force applied to the grip 110. The kinematic variable can comprise any of a distance of the grip 110 from a set point, a speed or velocity of movement of the grip 110 or an acceleration of the grip 110. The at least one detector or sensor 130 can provide an output to the controller 140 to enable the controller 140 to control a current or voltage being provided to the linear motor 120 to provide appropriate haptic feedback to the grip 110. In addition or as an alternative, the detector or sensor 130 can provide an input to, for example, a flight control system or other system that controls an engine of a vehicle containing the active throttle assembly so that the engine and vehicle can be controlled based on the output of the detector or sensor 130.

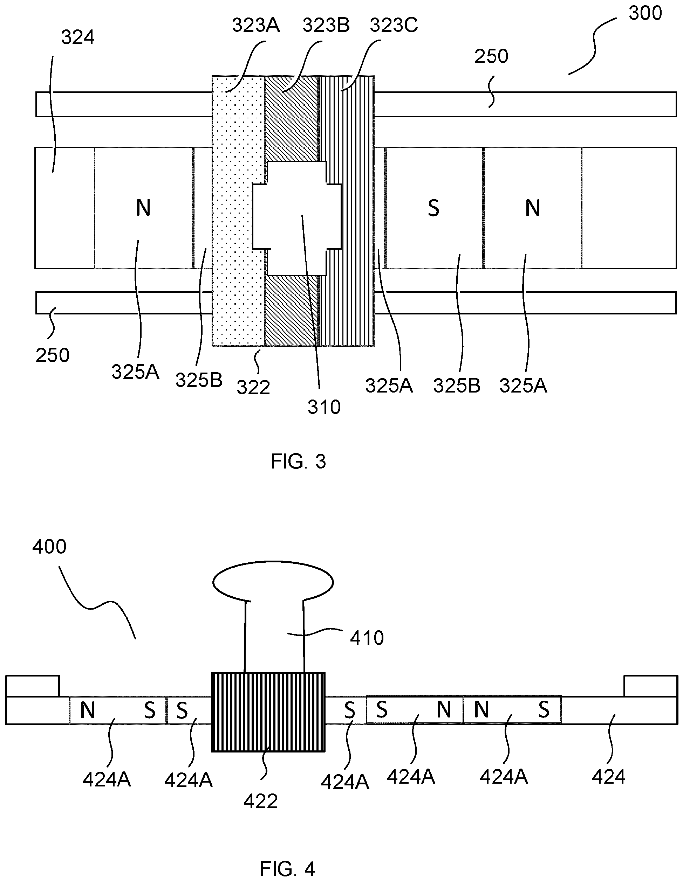

As discussed above, the linear throttle assembly 100 comprises a linear motor 120. Figures 2 and 3 show a linear throttle assembly 200 wherein the linear motor 120 is a linear induction motor or a linear DC brushless motor. In Figures 2 and 3, the linear motor comprises a linear induction motor or linear DC brushless motor wherein a stator of the motor is unwound and forms the linearly extending track 124. In Figure 2, the stator or linearly extending track 124 comprises a plurality or electromagnetic coils. In Figure 3 the carriage 122 comprises a plurality of electromagnetic coils and the linearly extend track 124 comprises a plurality of permanent magnets. In both cases, the linear induction motor or linear DC brushless motor is configured to work with n phases of power where n is at least 2. In some examples, n may be at least 3. In Figures 2 and 3, the linear induction motor or linear DC brushless motor is shown as being configured to work with 3 phases of power. However, the skilled person would understand this is purely exemplary and more phases of power could be used if required. In some examples, where three phase power is used, the power for the three phases of power can be supplied by a three-phase AC power source or power supply. However, in other examples, the power supply to the linear throttle assembly can comprise a DC power supply and the active throttle assembly can comprise a converter (not shown) configured to convert the DC power to the necessary phases of AC power required for the linear induction motor or linear DC brushless motor. When n is greater than or less than 3, this enables the linear induction motor or linear DC brushless motor to be provided with the required phases of power.

As mentioned above, the converter converts DC power into n phases of AC power. In some examples to make this conversion easy, the resultant AC power can have a trapezoidal waveform. However, in other examples, the waveform can be made sinusoidal in order to reduce any ripple in the force/torque output by the linear motor 120. This can provide improved and clearer haptic feedback.

In Figure 2 the linear throttle assembly 200 comprises a grip 210, and a linear motor comprising a carriage 222 and a linearly extending track 224 as described above with respect to Figure 1. The linear throttle assembly 200 also comprises a controller (not shown) which can comprise the controller 140 as described above with respect to Figure 1. As mentioned above, in Figure 2, the linear motor comprises a linear induction motor or linear DC brushless motor that is configured with n phases of power wherein n is at least 2, and in some examples at least 3. In Figure 2, the linearly extending track 224 of the motor comprises a plurality of electromagnetic coils 225A, 225B, 225C arranged in groups of n electromagnetic coils, wherein n is the number of phases of the linear induction motor or linear DC brushless motor. While in Figure 2 n is shown as being 3 and the number of groups of coils is shown as being 2, the skilled person would understand this is purely exemplary and provided n is at least 2 or at least 3 and the number of groups is at least 1, there can be any suitable number of coils per group and there can be any suitable number of groups.

When the linearly extending track 224 comprises a plurality of electromagnetic coils 225A, 225B, 225C arranged in groups of n coils, then the controller (not shown) described with respect to Figure 1 is configured to cause a power supply to provide power of an i^{th} phase to an i^{th} electromagnetic coil in each group of n magnetic coils wherein i goes from 1 to n. The times at which power is supplied to each coil can be controlled to cause movement of the carriage 210 with respect to the linearly extending track 224. The controller controls the movement of the carriage 210 to provide the required haptic feedback to the user or pilot.

In order to ensure the carriage 210 moves with respect to the linear extending track 224 when the linear motor is a linear induction motor, the carriage 210 can comprise a ferromagnetic or paramagnetic engagement portion which engages with the linearly extending track 224. In these examples engage means to move in relation to the electromagnetic field generated by the plurality of magnetic coils 225A, 225B, 225C that form the linearly extending track 224. Therefore, the carriage 210 may not directly contact or touch the linear extending track 224 when in use. In some examples, the ferromagnetic or paramagnetic engagement portion of the carriage 210 may comprise aluminium. In some examples, the carriage 210 may further comprise an iron backing plate. These features aid in ensuring the carriage 210 moves with respect to the electromagnetic field from the plurality of electromagnetic coils 225A, 225B, 225C.

In some examples when a linear DC brushless motor is used, the carriage 210 may comprise one or more permanent magnets to further enhance movement of the carriage 210 with resect to the linearly extending track 224. In some examples, a surface of the carriage 210 that faces or otherwise engages with the linearly extending track 224 may comprise alternating north and south magnet poles provided by a plurality of permanent magnets. In other examples, the carriage 210 may comprise a Halbach magnet array which can further improve the efficiency of the linear motor.

As discussed above, in Figure 2, the linearly extending track 224 comprises a plurality of electromagnetic coils 225A, 225B, 225C. Each electromagnetic coil 225A, 225B, 225C comprises a coil of wire. In some examples, the electromagnetic coil 225A, 225B, 225C also comprises a magnetic core and the coil of wire is wound around the magnetic core. The controller (not shown) then provides the appropriate phase of power to the electromagnetic coil 225A, 225B, 225C by causing the power supply (not shown) to provide an appropriate current or voltage to the coil of wire of the electromagnetic coil 225A, 225B, 225C.

The use of a linear induction motor or linear DC brushless motor as described with respect to Figure 2 provides a simple and effective linear motor that can be used to provide haptic feedback to linear throttle assembly 200. The use of a linear induction motor or linear DC brushless motor reduces the wear and tear of motors such as brushed motors and also allows easier control of movement of the linear motor than, for example, tubular linear motors.

In the example shown in Figure 2, the electromagnetic coils 225A, 225B, 225C are parallel to the linear extending track 224. This enables simple install and provides a linear motor with high torque sensitivity. In other examples, the electromagnetic coils 225A, 225B, 225C may instead be skewed with respect to the linearly extending track 224. The skew can be of any suitable angle to the vertical (e.g. a direction perpendicular to the linearly extending track 224). In some examples the angle of skew is any angle other than 90°. In some examples, the electromagnetic coils 225A, 225B, 225C may be skewed by an angle of between 0° and 89°. or between 1° and 89°, or between 0° and 45°, or between 1 ° and 45°, or between 25° and 45°, or between 35° and 45°, or between 30° and 50° to the vertical compared to the linearly extending track 224 in other words skewed at an angle of between 0° and 89°. or between 1° and 89°, or between 0° and 45°, or between 1 ° and 45°, or between 25° and 45°, or between 35° and 45°, or between 30° and 50° to a direction perpendicular to the linearly extending track 224. In some examples, the angle of skew may be 40°. These angles provide a good trade-off between reducing the cogging of parallel electromagnetic coils 225A, 225B, 225C and reduced torque sensitivity of skewed electromagnetic coils 225A, 225B, 225C.

In some examples, as shown in Figure 2, the electromagnetic coils 225A, 225B, 225C may have a square or rectangular shape. In other examples, the electromagnetic coils 225A, 225B, 225C may have an elongated octagonal shape. This can reduce cogging of the linear induction motor or linear DC brushless motor and thus allow improved haptic feedback for the linear throttle assembly 200.

Moving on now to Figure 3, an example of a linear throttle assembly 300 comprising a linear DC brushless motor is shown. However, in Figure 3 the plurality of magnetic coils 323A, 323B, 323C are provided on the carriage 332 while the linearly extending rail 334 comprises a plurality of permanent magnets 325A and 325B. As with the linear throttle assemblies in Figures 1 and 2, the linear throttle assembly 300 in Figure 3 comprises a grip 310, and a linear motor comprising a carriage 322 and a linearly extending track 324. The linear throttle assembly 300 also comprises a controller (not shown) which can comprise the controller 140 as described above with respect to Figure 1.

As with the linear induction motor or linear DC brushless motor of the linear throttle assembly of Figure 2, the linear DC brushless motor of Figure 3 is configured to work with n phases of power wherein n is at least 2 and in some examples n is at least 3. In this example, the carriage 322 comprises a magnetic engagement portion which is configured to engage with the linearly extending track 324. The magnetic engagement portion comprises a plurality of electromagnetic coils 323A, 323B, 323C arranged in groups of n electromagnetic coils wherein n is the number of phases of power. As with Figure 2, Figure 3 shows an example where n is 3. However, this should not be considered limiting and more or fewer electromagnetic coils could be used per group provided at least n is at least 2. In addition, in the example shown in Figure 3 only a single group of electromagnetic coils is shown. However, once again this should not be considered limiting and in some examples more groups of electromagnetic coils may be used. That said, the use of a single group of electromagnetic coils provides a limitation on the size of carriage 322 required which may be useful in some examples.

In the example shown in Figure 3, the linearly extending track 324 comprises a plurality of permanent magnets 325A, 325B. The plurality of permanent magnets 325A, 325B are arranged along the linearly extending track 324 such that a surface of the linearly extending track 324 which will engage with the magnetic engagement portion of the carriage 322 comprises alternating north 325A and south 325B poles of the permanent magnets 325A, 325B.

The controller (not shown) is configured to cause a power supply to provide power of an i^{th} phase to an i^{th} electromagnetic coil in each group of electromagnetic coils. The times at which power is supplied to each coil can be controlled to cause movement of the carriage 310 with respect to the linearly extending track 324. The controller controls the movement of the carriage 310 to provide the required haptic feedback to the pilot.

The electromagnetic coils 323A, 323B, 323C each comprise a coil of wire. In some examples, the electromagnetic coils 323A, 323B, 323C further comprises a magnetic core and the coil of wire is wound around the magnetic core.

In the example shown in Figure 3, the plurality of permanent magnets 325A, 325B are aligned parallel to the linearly extending track 324. This enables easy install of the plurality of permanent magnets 325A, 325B and provides improved torque sensitivity of the linear motor. However, in other examples, the plurality of permanent magnets 325A, 325B can be skewed compared to a vertical (e.g. a direction perpendicular to the linearly extending track 324). This skew can reduce cogging of the linear motor. In some examples, the angle of skew may be an angle of between 0° and 89°. or between 1 ° and 89°, or between 0° and 45°, or between 1 ° and 45°, or between 25° and 45°, or between 35° and 45°, or between 30° and 50° and may by for example 40° in order to provide a desirable trade-off of cogging and torque sensitivity. The plurality of permanent magnets 325A, 325B shown in Figure 3 are square or rectangular shaped. However, in other examples, the plurality of permanent magnets 325A, 325B may be an elongated octagonal shape in order to reduce cogging.

In Figure 2 and Figure 3 an optional feature of a linear guide 250 is shown. As discussed above, when a linear induction motor or linear DC brushless motor is used, the carriage 222, 322 may not contact the linearly extending track 224, 324. The carriage 222, 322 may thus be slidably mounted on the linear guide 250 to provide support for the carriage 222, 322 e.g. to provide support for the weight of the carriage 222, 322. The linear guide 250 extends parallel to the linearly extending track 224, 324. In the examples in Figure 2 and Figure 3 two linear guides 250 are provided, one on each side of the linearly extending track 224, 324 such that the linearly extending track 224, 324 is positioned between the two linear guides 250. The carriage 222, 322 is then slidably mounted on both linear guides 250. This can provide improved support for the carriage 222, 322. However, the skilled person would understand in other examples only a single linear guide 250 may be present with the linear guide 250 being adjacent to the linearly extending track 224, 324 and extending parallel to the linearly extending track 224, 324 on one side of the linearly extending track 224, 324. In other examples, more linear guides 250 may also be present. In examples where one or more linear guides 250 are present, the one or more linear guides 250 may comprise a stop on one or both ends of the one or more linear guides 250. These stops can also be referred to as blocks, ends or barriers. The use of stops limits the movement of the carriage 222, 322 and thus prevents the carriage 222, 322 coming off the linear guides 250 and also dependent upon the setup limits the movement of the grip 210, 310 and hence the input to the linear throttle assembly 200, 300.

While Figures 2 and 3 concentrate on linear induction motors or linear DC brushless motors, the skilled person would understand that any suitable form of linear motor could be used. For example, the linear motor could comprise a brushed linear motor, a synchronous linear motor, a homopolar linear motor, a tubular linear motor, a piezoelectric linear motor or any other suitable form of linear motor. In Figures 4, 5 and 6 below show examples of a linear throttle assembly wherein the linear motor comprises a tubular linear motor, homopolar linear motor and brushed linear motor respectively.

As mentioned above, in Figure 4, the linear throttle assembly 400 comprises a linear motor wherein the linear motor comprises a tubular linear motor. As with the linear throttle assembly 100 in Figure 1, the linear throttle assembly comprises grip 410 and controller (not shown) which is configured to control a current or voltage supplied to the linear motor to provide haptic feedback to a user of the linear throttle assembly 400. In the example of Figure 4, the linearly extending track 124 comprises a rod 424 wherein the rod 424 is formed from or otherwise comprises one or more cylindrical permanent magnets 424A. When, as shown in Figure 4 a plurality of cylindrical permanent magnets 424A are used then adjacent magnets are aligned such that corresponding poles face each other or are positioned next to each other. In other words, if a first cylindrical magnet is aligned with the north pole to the left and the south pole to the right then a second cylindrical magnet to the right of the first cylindrical magnet is aligned with the south pole to the left and the north pole to the right. This results in the rod 424 having a magnetic field that alternates between being north and south poled along its length.

In the example in Figure 4 then the carriage 422 comprises a forcer that is formed of a cylinder that surrounds the rod 424 and one or more solenoid coils that are wrapped around the cylinder. In some examples, the linear throttle assembly can be used with n phases of power as described above. In such examples, there may be a plurality of solenoid coils arranged in groups of n solenoid coils. In such an example the controller (not shown) is configured to cause a power supply to provide power of an i^{th} phase to an i^{th} solenoid coil in each group of solenoid coils. The times at which power is supplied to each solenoid coil can be controlled to cause movement of the carriage 410 with respect to the linearly extending track 424. The controller controls the movement of the carriage 410 to provide the required haptic feedback to the pilot.

While Figure 4 shows an example where the carriage 422 forms an outside part of the tubular linear motor and the linearly extending track 424 the inside part, the skilled person would understand that in other examples the carriage could comprise an inside part and be formed of permanent magnets while the linearly extending track 424 could comprise the outside part and comprise solenoid coils. In such an example a break in the solenoid coils could be formed to allow the grip to be attached to the carriage. Again, the controller could be configured to control the current or voltage provided to the solenoid coils to control movement of the carriage and hence provide haptic feedback to the pilot.

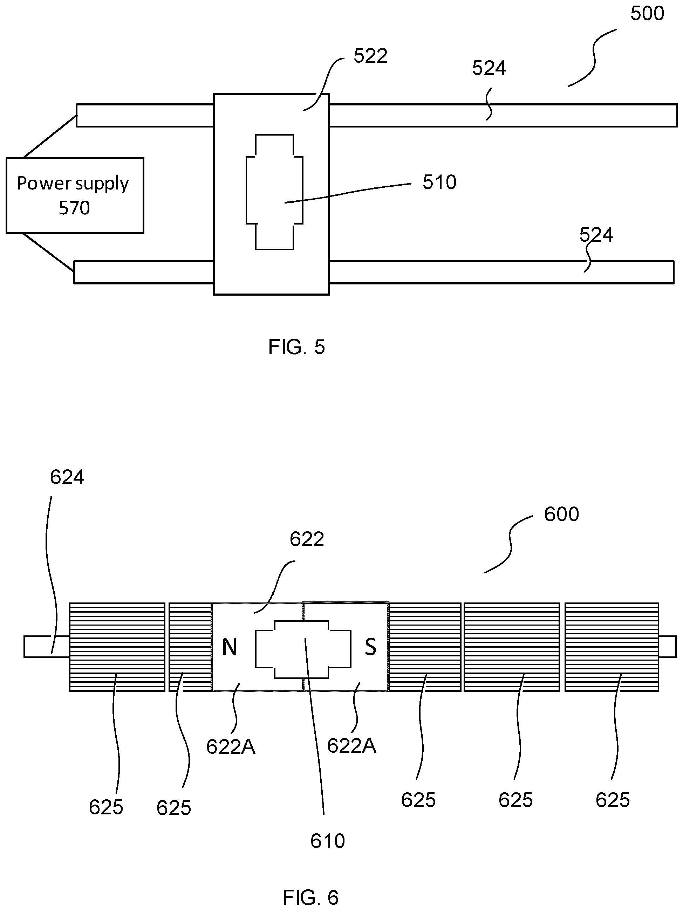

Figure 5 shows a linear throttle assembly 500 wherein the linear motor is a homopolar linear motor. As with the examples above, the linear throttle assembly 500 comprises a grip 510 and a controller (not shown) which is configured to control the power provided to the homopolar linear motor via power supply 570. The controller (not shown) controls the power provided to the homopolar linear motor in order to provide haptic feedback to a user of the linear throttle assembly 500. In the example shown in Figure 5, the linearly extending track comprises a pair of linearly extending rails 524. Each of the linearly extending rails are connected to a power supply 570 at one end wherein the first and second linearly extending rail are connected to the power supply at the same end as each other. One of the linearly extending rails 524 receives positively charged current or voltage and the other negatively charged current or voltage. The combination of power supply 570 and linearly extending rails 524 thus form an incomplete circuit. This circuit is completed by the carriage 522 upon which the grip 510 is mounted. The carriage 522 sits on the linearly extending rails 524 and since it is formed from a conductive material completes the circuit. The controller (not shown) controls the current or voltage the power supply 570 supplies to the linearly extending rails 524 and thus causes movement of the carriage 522 with respect to the linearly extending rails 524 and thus provides haptic feedback to the pilot using the linear throttle assembly 500. While not shown, in some examples of Figure 5, the linear throttle assembly 500 can also comprise a linear guide similar to the linear guide 250 shown in Figures 2 and 3. This guide runs parallel to the linearly extending rails 524 and can be positioned between the linearly extending rails 525 or on one side of the linearly extending rails 524. The carriage 522 can be mounted on the linear guide and the linear guide can thus provide further support for the carriage 522.

Figure 6 shows a linear throttle assembly 600 wherein the linear motor is a brushed linear motor. The linear motor comprises a linearly extending track 624 which comprise a plurality electromagnetic coils 625 arranged along a length of the linearly extending track 624. The linear motor also comprises a carriage 622 on which grip 610 is mounted. The carriage comprise a magnetic engagement portion. The magnetic engagement portion is configured to engage with the electromagnetic coils 635 of the linearly extending track 624. The magnetic engagement portion comprises a plurality of permanent magnets 622A mounted along a length of the carriage such that a surface of the carriage which engages with the linearly extending track comprises alternating north and south poles of the permanent magnets. The plurality of permanent magnets 622A may also be arranged in a Halbach magnet array. The carriage 622 also comprises a brush connected to a power supply wherein, in use, the brush is configured to connect to the plurality of electromagnetic coils 625 of the linearly extending track and hence connect at least one coil of the plurality of electromagnetic coils 625 to the power supply. In other words the brush, in use, is configured to connect to a coil from the plurality of electromagnetic coils 625 under the brush wherein the coil the brush connects with changes as the carriage 622 moves along the linearly extending track 624. The power supply can form part of the carriage 622. In some examples, the power supply is a DC power supply which provides power to successive electromagnetic coils 625 when the carriage moves along the linearly extending track 624 via the brush. In some examples a plurality of brushes or at least two brushes can be used wherein the plurality of brushes or at least two brushes, are configured to, in use connect to the plurality of electromagnetic coils 625 of the linearly extending track 624.

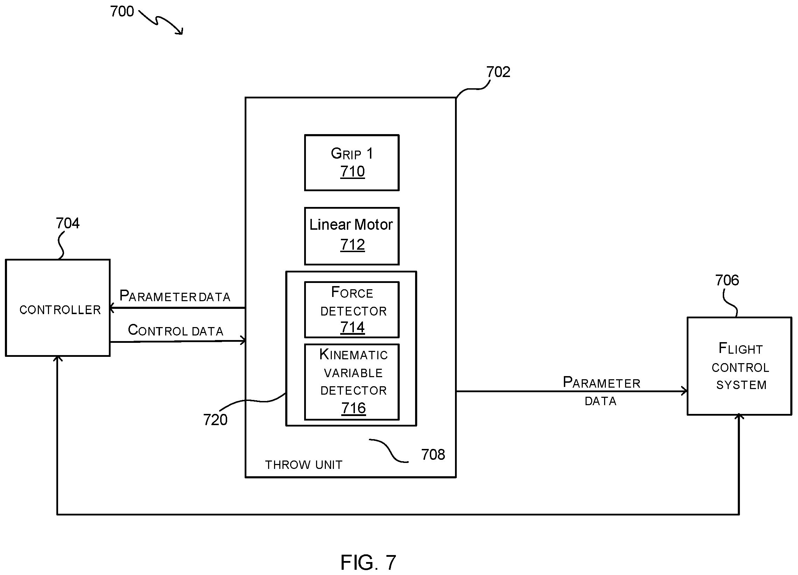

While Figures 2 to 6 provide examples of linear motors that can be used to provide haptic feedback to a grip 110 of a linear throttle assembly 100, the examples given should be in no way be considered limiting and any form of linear motor could be used to provide the haptic feedback. While Figures 2 to 6 do not show the at least one detector or sensor 130 and the controller 140 of Figure 1 for simplicity these features are included in all examples. The at least one detector or sensor 130 and the controller 140 will now be discussed in greater detail. To this end, Figures 7 to 9 provide further details of how a linear throttle assembly is used as part of aircraft control.

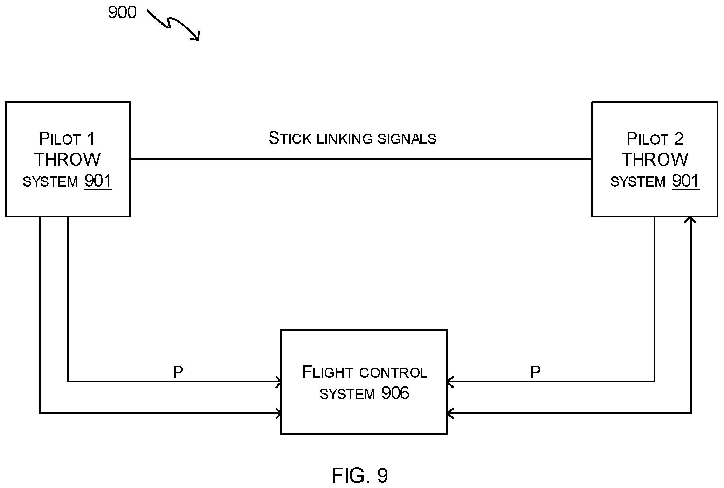

In fly by wire technologies, an engine of an aircraft is controlled based on a sensed position of the grip 110 of a throttle assembly 100 rather than the grip 110 of the throttle assembly having a direct mechanical connection to an engine of the aircraft containing the throttle assembly. The active linear throttle assembly arrangements of Figures 1 to 6 described herein may be used in a single-throw (i.e. single throttle linearly moveable grip) active linear throttle assembly as shown in Figure 7 or in a multi-throw active linear throttle assembly (i.e. comprising multiple throttle linearly moveable grips) as shown in Figure 9. In most cases, the active linear throttle assembly arrangements described herein are used in a single or double throw active linear throttle assembly (also can be referred to as a single axis active linear throttle assembly or a double axes active linear throttle assembly). Figures 1 to 6 may be used for single/independent pilot operation (e.g. as shown in the example system of Figure 7) and also in systems where the controls of the pilot and co-pilot are linked, e.g. systems where movement of the throttle by the pilot results in the co-pilot's throttle moving so that the throttle throws (i.e. linearly moveable grips) are at the same position (e.g. at the same angular position) for both the pilot and the co-pilot (e.g. as shown in the example system of Figure 9).

Figure 7 is a schematic diagram of a system 700 comprising a throw unit 702 and a controller 704 and a flight control system 706. It will be appreciated that the system 700 shown in Figure 7 only shows a part of an overall aircraft system. Furthermore, it will be appreciated that whilst Figure 7 shows a single flight control system 706, there may be more than one (e.g. for redundancy). The throw unit 702, which may also be referred to as a throttle unit, comprises an active linear throttle assembly 708 comprising a linearly moveable grip 710, a linear motor 712, and a detector 720 configured to measure at least one of a kinematic variable 716 or a force or torque 714 applied to the grip 710. An active linear throttle assembly 708 may comprise one or more controllers. It will be appreciated that an active linear throttle assembly 708 may comprise other elements in addition to those shown in Figure 7. Whilst the active linear throttle assembly 708 is shown as comprising a single force/torque detector 714 and a single kinematic variable detector 716, it will be appreciated that there may one or more of each (e.g. to provide redundancy in the case of failure of one of these elements).

As shown in Figure 7, the throw unit 702 outputs parameter data P to both the controller 704 and the flight control system 706. The flight control system 706 uses these inputs (along with other inputs in some implementations) to control the aircraft engines (not shown). The parameter data P comprises one or more of: force, torque, velocity, acceleration and/or position data determined by the detector 720 that is configured to measure at least one of a kinematic variable or a force applied to the grip 710. The controller 704 uses these inputs to control the linear motor 712 (e.g. to determine what haptic feedback to provide via the linearly moveable grip 710) and outputs control data C to the throw unit 702 which provides control signals for the linear motor 712. As shown in Figure 7, the controller 704 may also communicate with the flight control system 706, e.g. to receive additional data (e.g. control characteristic data) that is then used to determine the haptic feedback required and hence generate the control data C that is output to the throw unit 702 to control the linear motor 712. Haptic feedback models may be stored and used to determine the control signals to generate based on the inputs received by the controller 704. The control characteristic data that is received from the flight control system 706 may, for example, define aspects of the model that the linearly moveable grip 710 is following (e.g. one or more of: positions of stops, forces required to overcome any stops, spring gradients, damping terms, etc.). The system 700 forms a part of a throw system of a vehicle (e.g., an aircraft).

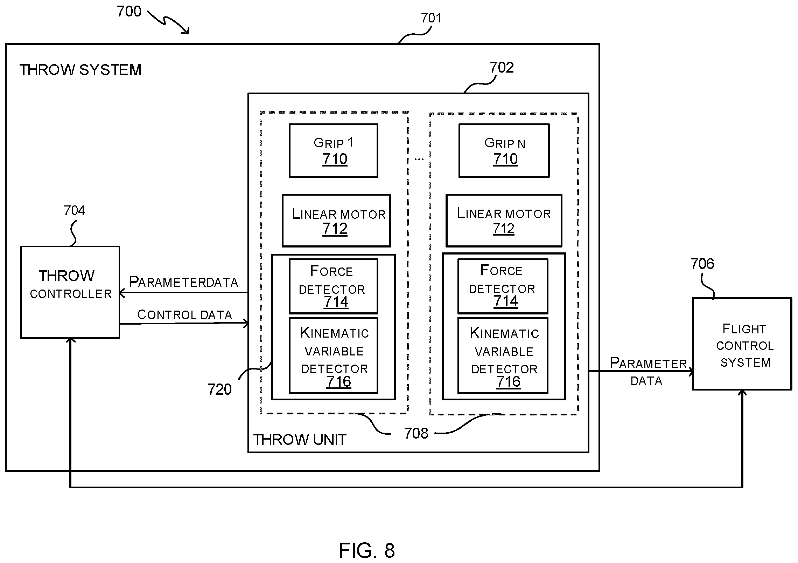

Figure 8 is a schematic diagram of a system 700 comprising throw system 701 (comprising a throw unit 702 and a throw controller 704) and a flight control system 706. It will be appreciated that the system 700 shown in Figure 8 only shows a part of an overall aircraft system. Furthermore, it will be appreciated that whilst Figure 8 shows a single flight control system 706, there may be more than one (e.g. for redundancy). The throw unit 702, which may also be referred to as a throttle unit, comprises one or more active linear throttle assemblies 708 (e.g. n active linear throttle assemblies, where n is an integer greater than or equal to one), one for each linearly moveable grip 710. Each active linear throttle assembly 708 comprises a linearly moveable grip 710, a linear motor 712, and a detector configured to measure at least one of a kinematic variable 716 and/or a force or torque applied to the grip 714. Each active linear throttle assembly 708 may comprise one or more controllers. It will be appreciated that an active linear throttle assembly 708 may comprise other elements in addition to those shown in Figure 8 and whilst each active linear throttle assembly 708 is shown as comprising a single force/ torque detector 714 and a single kinematic variable detector 716, it will be appreciated that there may one or more of each (e.g. to provide redundancy in the case of failure of one of these elements).

As shown in Figure 8, the throw unit 702 outputs parameter data P (for each of the active linear throttle assemblies 708) to both the throw controller 704 and the flight control system 706. The parameter data P may comprise one or more of: force, torque, velocity, acceleration and/or position data. The flight control system 706 uses these inputs (along with other inputs in some implementations) to control the aircraft engines (not shown). The controller 704 uses these inputs to control the linear motors 712 (e.g. to determine what haptic feedback to provide via each linearly moveable grip 710) and outputs control data C to the throw unit 702 which provides control signals for each of the motors 712. As shown in Figure 8, the throw controller 704 may also communicate with the flight control system 706, e.g. to receive additional data (e.g. control characteristic data) that is then used to determine the haptic feedback required and hence generate the control data C that is output to the throw unit 702 to control the linear motors 712. Haptic feedback models (may be stored and used to determine the control signals to generate based on the inputs received by the throw controller 704. The control characteristic data that is received from the flight control system 706 may, for example, define aspects of the model that the linearly moveable grip is following (e.g. one or more of: positions of stops, forces required to overcome any stops, spring gradients, damping terms, etc.).

The system 700 of Figure 8 comprises only a single throw system 701 (and hence a single throw unit 702). This may, for example, be used in a single pilot aircraft or it may be positioned within the cockpit between the pilot and co-pilot so that both the pilot and the co-pilot can reach and operate the linearly moveable grips 710 of the active linear throttle assemblies 708. Figure 9 shows an alternative system 900 which comprises separate quadrant systems 901 for each of the pilot and the co-pilot (labelled pilot 1 and pilot 2 throw systems in this example). The throw units 902 within each of these throw systems 901 may be positioned in outboard locations within the cockpit. Each of the throw systems 901 provides force and/or kinematic variable data to the flight control system 906 (or to each of the flight control systems 906 where there are more than one).

In this system 900, the two throw systems 901 are linked. In the example shown in Figure 9 they are linked electrically, rather than mechanically, with stick linking signals being communicated between the throw systems 901. These stick linking signals provide control data that keeps the positions of the corresponding linearly moveable grips 910 in each of the two throw units 902 aligned (it keeps linearly moveable grip 1 in the throw unit in pilot 1 throw system aligned with linearly moveable grip 1 in the throw unit in pilot 2 throw system, linearly moveable grip 2 in the throw unit in pilot 1 throw system aligned with linearly moveable grip 2 in the throw unit in pilot 2 throw system, etc). In other examples, the two throw systems 901 may be linked mechanically.

As discussed above, the linear throttle assembly according to any of Figures 1 to 6 comprises a detector 130 configured to measure at least one of a kinematic variable of the grip 110, 210, 310, 410, 510, 610 or a force applied to the grip 110, 210, 310, 410, 510, 610. The variable sensed by the detector can be used by the controller 140 or by a flight control system as described above with respect to Figures 7 to 9.

In some examples, the detector 130 may comprise a force detector or a force sensor that measures a force applied to the grip 110, 210, 310, 410, 510, 610 by the pilot or user. In some examples, it is possible to use a motor current from the linear motor 120 to determine the force and thus the force detector can comprise a detector of the motor current. However, in other examples an additional force or torque sensor is used. In other words the force detector is separate from the linear motor 120 and does not sense the motor current of the linear motor 120. The force detector can thus be considered distinct or remote to the linear motor 120. In this regard, the force or torque sensor can comprise any suitable form of force of torque sensor such as an elastic element, an electrical resistance strain gauge, a foil strain gauge, a semiconductor strain gauge, a thin film strain gauge, a wire strain gauge, a piezoelectric transducer, a hydraulic load cell, a pneumatic load cell, a magno elastic, or a vibration element. The use of a force or torque sensor that does not rely on motor current of the linear motor 120 increases the accuracy of the detected force. Using motor current to detect force doesn't allow for variations in the torque-constant of the linear motor 120 that changes between builds nor does it account for the effect of motor temperature on the winding resistance. Thus, the use of motor current to sense force can have an inaccurate result that may not be suitable for controlling the aircraft or vehicle. The use of an external or separate force detector can overcome this issue.

In some examples, the force detector is positioned close or proximate to the grip 110, 210, 310, 410, 510, 610, for example, the force detector can be positioned to minimize a number of dynamic components or bearings, belts, gears etc. between where the force is applied to the grip 110, 210, 310, 410, 510, 610, and the force detector. In other examples, the force detector can be positioned on the grip 110, 210, 310, 410, 510, 610. Having the force detector on or close to the grip 110, 210, 310, 410, 510, 610 ensures the accuracy of any measurement made.

In addition or as an alternative, in some examples, the detector 130 may comprise one or more kinematic variable detectors or sensors configured to measure a kinematic variable of the grip 110, 210, 310, 410, 510, 610. The kinematic variable detector may comprise a position detector configured to detect a position of the grip 110, 210, 310, 410, 510, 610 with respect to the linearly extending track 124, 224, 324, 424, 524, 624, a velocity detector configured to detect a velocity of the grip 110, 210, 310, 410, 510, 610 with respect to the linearly extending track 124, 224, 324, 424, 524, 624, or an acceleration detector configured to detect an acceleration of the grip 110, 210, 310, 410, 510, 610 with respect to the linearly extending track 124, 224, 324, 424, 524, 624. The kinematic variable detector is separate from the linear motor 120 and thus provides a reading in addition to a position of the linear motor 120. This ensures the accuracy of the reading of the kinematic variable as opposed to taking the reading from the linear motor 120. The use of a kinematic variable detector enables this information to be provided to a flight control system of an aircraft or other vehicle containing the active throttle assembly to provide additional data on the position of the grip of the throttle assembly to provide a backup mode if there are any faults with the linear motor. This data from the kinematic variable detector can also be used to determine the appropriate haptic feedback and in some examples, to control a vehicle containing the active throttle assembly.

In some examples only a single kinematic variable detector is used. In other examples, multiple kinematic variable detectors are used. For example, the kinematic variable detectors may comprise a position and a velocity detector, a position and an acceleration detector, a velocity and an acceleration detector or a position, a velocity and an acceleration detector. In addition or as an alternative multiple kinematic variable detectors of the same form may be used. The kinematic variable detector may be any suitable form of detector. When a position detector is used, the position detector may comprise at least one of a non-contacting sensor, a rotary variable differential transformer, a hall effect or a linear variable differential transformer. When a velocity detector is used the velocity detector may comprise at least one of, for example, a brushless resolver or any position detector incorporating a time derivation component. When an acceleration detector is used, the acceleration detector may comprise at least one of for example, a redundant accelerometer or any position detector with suitable time derivation components. The kinematic variable detector may be positioned on, close to or proximate to the grip 110, 210, 310, 410, 510, 610 to ensure accuracy of any reading. The kinematic variable detector being proximate or close to the grip 110, 210, 310, 410, 510, 610 may comprise the kinematic variable detector being positioned to minimize a number of dynamic components or bearings, belts, gears etc. between where the force is applied to the grip 110, 210, 310, 410, 510, 610, and the kinematic variable detector.

While in some examples, the detector 130 may comprise only one of a force detector or a kinematic variable detector, in some examples both a force detector and a kinematic variable detector can be used. In these examples the force detector and kinematic variable detector can be as described above. In normal flight, the kinematic variable detector may provide data to the controller 130, 704 and flight control system 706. However, if the grip 110, 210, 310, 410, 510, 610 becomes jammed, then the kinematic variable may no longer change when a pilot applies a force to the grip 110, 210, 310, 410, 510, 610. Therefore, the use of an additional force detector on or proximate to the grip 110, 210, 310, 410, 510, 610 such that the force can be detected even when the grip 110, 210, 310, 410, 510, 610 does not move enables the pilot to still provide input signals to the throttle assembly 100, 200, 300, 400, 500, 600. This increases safety as it ensures an aircraft or other vehicle containing the throttle assembly 100, 200, 300, 400, 500, 600 can still be controlled even when the grip 110, 210, 310, 410, 510, 610 of the throttle assembly 100, 200, 300, 400, 500, 600 is jammed.

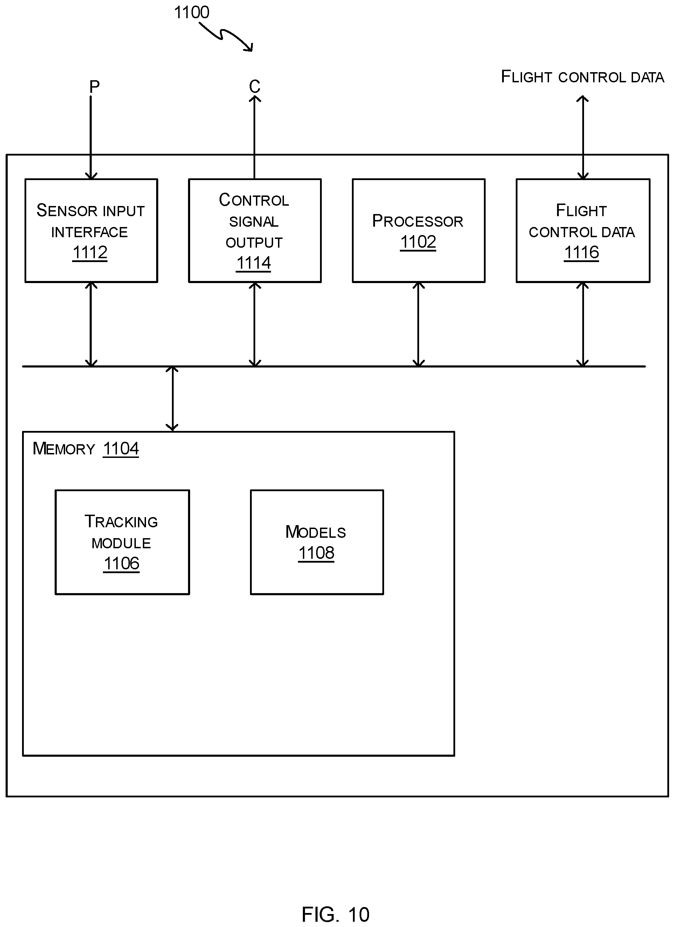

Figure 10 is a schematic diagram of a computing device 1100 that is configured to control an active linear throttle assembly such as that shown in Figures 1 to 9 and hence may act as the controller 140 in Figure 1, controller 704 in Figure 7 or throw controller 704 in Figure 8.

The computing device 1100 comprises one or more processors 1102 and a memory 1104 arranged to store executable instructions that are executed by the processor 1102. The memory 1104 is arranged to store a module 1106 that comprises instructions that, when executed by the processor 1102, cause the computing device 1100 to control the active linear throttle assembly to provide haptic feedback. The memory 1104 may also store data that is used and/or updated by the module 1106, such as the linearly moveable grip models 1108. These models, which may correspond to a single linearly moveable grip or a group of two or more linearly moveable grips, define how the control data C is generated that operates the linear motor attached to the linearly moveable grip and provides haptic feedback.

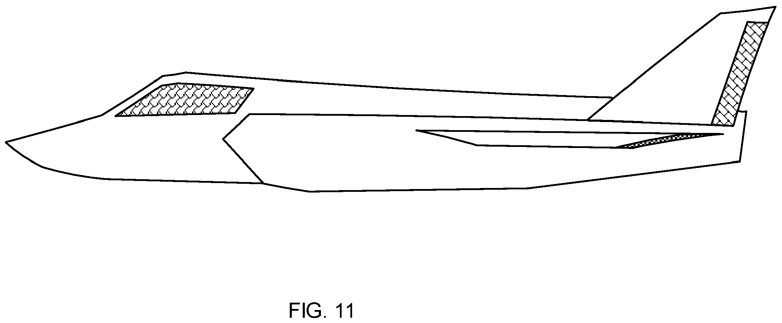

As shown in Figure 11, the computing device 1100 also comprises a plurality of interfaces such as a detector input interface 1112 that is configured to receive the parameter data P, such as but not limited to force data, kinematic variable data, from a throw unit 102, a control signal output interface 1114 that is configured to output control data C to the throw unit 102 and a flight control interface 1116 that is configured to communicate with a flight control system 106.

In the example shown in Figure 11, the computing device 1100 comprises a flight control interface 1116. In other examples a single computing device may operate as both the flight control system 106 and the controller 140, 704 and, in such examples, the flight control interface may be replaced by one or more interfaces that receive data from other detectors and systems in the aircraft and the memory 1104 may comprise a flight control system module.

Figure 11 shows a vehicle (e.g., an aircraft) comprising the active linear throttle assembly described herein.

In a non-limiting summary, the present application defines a linear active throttle assembly comprising a grip and a linear motor. The linear motor comprises a carriage and a linearly extending track wherein the grip is mounted to the carriage. The linear motor can comprise any suitable form of linear motor including a synchronous linear motor, a homopolar linear motor, a brushed linear motor, a tubular linear motor, a linear induction motor, a linear DC brushless motor, and a piezoelectric linear motor. The linear active throttle assembly further comprises a controller configured to control a current or voltage provided by a power supply to at least one of the linearly extending track or the carriage in order to control movement of the carriage with respect to the linearly extending track. In addition, the linear active throttle assembly comprises a detector configured to measure at least one of a kinematic variable of the grip or a force applied to the grip. This detector can be separate from the linear motor and not rely on either linear motor current or motor position. The variable sensed by the detector can be fed to the controller to control the haptic feedback provided by the active throttle assembly. The variable sensed by the detector can also be used to control operation of an engine of a vehicle containing the active linear throttle assembly.

## Claims

1. An active throttle assembly (100, 200, 300, 400, 500, 600) comprising:
a linear motor (120), the linear motor (120) comprising a linearly extending track (124, 224, 324, 425, 524, 624) and a carriage (122, 222, 322, 422, 522, 622);
a grip (110, 210, 310, 410, 510, 610), wherein the grip (110, 210, 310, 410, 510, 610) is affixed to the carriage (122, 222, 322, 422, 522);
a controller (140) configured to control a current or voltage provided by a power supply (570) to at least one of the linearly extending track (124, 224, 324, 424, 524, 624) or the carriage (122, 222, 322, 422, 522, 622) in order to control movement of the carriage (122, 222, 322, 422, 522, 622) with respect to the linearly extending track (124, 224, 324, 424, 524, 624); and
a detector configured to measure at least one of a kinematic variable of the grip or a force applied to the grip (110, 210, 310, 410, 510, 610).

2. The active throttle assembly (100, 200, 300, 400, 500, 600) of claim 1, wherein:
the controller (140) is configured to control current or voltage provided by the power supply (570) to provide haptic feedback to a user of the active throttle assembly (100, 200, 300, 400, 500, 600) to indicate an operating condition of an engine of a vehicle containing the active throttle assembly (100, 200, 300, 400, 500, 600).

3. The active throttle assembly (100, 200, 300, 400, 500, 600) of claim 1 or claim 2, wherein the detector comprises at least one of:
a force detector arranged to measure a force applied to the grip (110, 210, 310, 410, 510, 610) by a user; and
a kinematic variable detector arranged to measure a kinematic variable of the grip (110, 210, 310, 410, 510, 610).

4. The active throttle assembly (100, 200, 300, 400, 500, 600) of any previous claim, further comprising:
a power supply (570) configured to provide power to the linear motor (120) under control of the controller (140).

5. The active throttle assembly (100, 200) of any previous claim, wherein:
the linear motor (120) comprises a linear induction motor or linear DC brushless motor configured to work with n phases of power, wherein n is at least 2;
the linearly extending track (124, 224) comprises a plurality of electromagnetic coils (225A, 225B, 225C), wherein the electromagnetic coils (225A, 225B, 225C) are arranged along a length of the linearly extending track in groups of n electromagnetic coils, wherein each electromagnetic coil comprises a coil of wire;
the controller (140) is configured to cause the power supply to provide power of an i^{th} phase to the coil of wire of the i^{th} electromagnetic coil in each group of n electronic coils, wherein i goes from 1 to n.

6. The active throttle assembly (100, 200) of claim 5, wherein:
the linear motor (120) comprises a linear indication motor and the carriage (122, 222) comprises a ferromagnetic or paramagnetic engagement portion configured to engage with the linearly extending track; or
the linear motor (120) comprises a linear DC brushless motor, the carriage (122, 222) comprises one or more permanent magnets; and a surface of the carriage (122, 222) that faces or otherwise engages with the linearly extending track comprises alternating north and south magnet poles of the one or more permanent magnets.

7. The active throttle assembly (100, 200) of claim 5 or claim 6, wherein the electromagnetic coils (225A, 225B, 225C) are skewed along the length of the linearly extending track (124, 224).

8. The active throttle assembly (100, 300) of any of claims 1 to 4, wherein:
the linear motor (120) comprises a brushless DC motor configured to work with n phases of power, wherein n is at least 2;
the carriage (122, 322) comprises a magnetic engagement portion configured to engage with a surface of the linearly extending track, wherein the magnetic engagement portion comprises a plurality of electromagnetic coils (323A, 323B, 323C) arranged in groups of n electronic magnetic coils, wherein each electromagnetic coil comprises a coil of wire;
the linearly extending track (124, 324) comprises a plurality of permanent magnets (325A, 325B) mounted along a length of the linearly extending track such that the surface of the linearly extending track comprises alternating north and south poles of the permanent magnets (325A, 325B); and
the controller (140) is configured to cause the power supply to provide power of an i^{th} phase to the coil of wire of the i^{th} electromagnetic coil in each group of n electronic coils, wherein i goes from 1 to n.

9. The active throttle assembly (100, 300) of claim 8, wherein the plurality of permanent magnets (325A, 325B) are skewed along the length of the linearly extending track.

10. The active throttle assembly (100, 300) of any of claims 5 to 9 wherein the power supply is a DC power supply, and the active throttle assembly further comprises:
a converter configured to convert DC power from the power supply to each of n phases of AC power.

11. The active throttle assembly (100, 200, 300) of any of claims 5 to 10 further comprising:
a linear guide (250) positioned parallel with and adjacent to the linearly extending track (124, 224, 324), wherein the carriage (122, 222, 322) is slidably mounted on the linear guide such that the carriage can move linearly along the linear guide.

12. The active throttle assembly (100, 400) of any of claims 1 to 4, wherein:
the linear motor (120) comprises a tubular linear motor;
the linearly extending track (124, 424) comprises a rod, wherein the rod comprises one or more cylindrical permanent magnets (424A, 424B); and
the carriage (122, 422) comprises a forcer, wherein the forcer comprises:
a cylinder that surrounds at least a part of the rod; and
one or more solenoids wrapped around the cylinder.

13. The active throttle assembly (100, 500) of any of claims 1 to 4, wherein:
the linear motor (120) comprises a homopolar linear motor;
the linearly extending track (124) comprises a pair of linearly extending rails (524) wherein the pair of linearly extending rails are connected to the power supply (570) at one end; and
the carriage (522) is configured to complete a circuit between the two linear extending rails (524).

14. The active throttle assembly (100, 600) of any of claims 1 to 4, wherein:
the linear motor (120) comprises a brushed linear motor;
the linearly extending track (124, 624) comprises plurality of electromagnetic coils (625) arranged along a length of the linearly extending track; and
the carriage (122, 622) comprises a magnetic engagement portion configured to engage with the electromagnetic coils of the linearly extending track, wherein the magnetic engagement portion comprises:
a plurality of permanent magnets (622A) mounted along a length of the carriage such that a surface of the carriage which engages with the linearly extending track comprises alternating north and south poles of the permanent magnets (622A); and
a brush connected to a power supply wherein the brush is configured to, in use, connect to the plurality of electromagnetic coils of the linearly extending track.

15. An aircraft comprising an active linear throttle assembly according at any of claims 1 to 14.
